# EUROPEAN PATENT SPECIFICATION

(11) **EP 3 226 437 B1**
(45) Date of publication and mention of the grant of the patent: **22.04.2020**
(21) Application number: 16305375.4
(22) Date of filing: 31.03.2016
(51) Int. Cl.: H04B 7/06, H04W 72/04

(54) **APPARATUSES, METHODS, AND COMPUTER PROGRAMS FOR A BASE STATION TRANSCEIVER AND A MOBILE TRANSCEIVER**
VORRICHTUNGEN, VERFAHREN UND COMPUTERPROGRAMME FÜR EINEN BASISSTATIONS-SENDER-EMPFÄNGER UND EINEN MOBILEN SENDER-EMPFÄNGER
PROCÉDÉS, APPAREILS ET PROGRAMMES INFORMATIQUES POUR ÉMETTEUR/RÉCEPTEUR DE STATION DE BASE ET ÉMETTEUR/RÉCEPTEUR MOBILE

(43) Date of publication of application: 04.10.2017
(73) Proprietor: Alcatel Lucent, 91620 Nozay (FR)
(72) Inventor: Braun, Volker, 70435 Stuttgart (DE); Halbauer, Hardy, 70435 Stuttgart (DE)
(74) Representative: Novagraaf Technologies

(56) References cited:
- US-A1- 2009 161 772
- US-A1- 2010 165 914
- US-A1- 2013 121 185
- US-A1- 2014 293 803
- US-A1- 2015 131 750
- US-A1- 2015 280 802

## Description

### Technical Field

Embodiments relate to apparatuses, methods and computer programs for a base station transceiver and a mobile transceiver, more particularly, but not exclusively to a hybrid concept of using adaptive beamforming in a grid of beams in a mobile communication system.

### Background

This section introduces aspects that may be helpful in facilitating a better understanding of the invention(s). Accordingly, the statements of this section are to be read in this light and are not to be understood as admissions about what is in the prior art or what is not in the prior art.

With the increasing demand for data services, wireless systems tend to use more and more bandwidth and higher carrier frequencies. For example, Fifth Generation (5G) wireless access may be expected to embrace mm-Wave frequencies to provide multi-Gbps data rates, typically in femto, pico, or metro cell type of deployments. Free space propagation or path loss increases at higher frequencies and may be compensated by exploiting antenna directivity. This may be achieved using high gain BeamForming (BF) solutions.

5G mm-wave (MMW) access systems may require adaptive beamforming to compensate for the increased path loss at the higher frequencies (f² law). For example, a MMW base station may implement a grid of fixed beams and may transmit a per-beam pilot sequence from each of the beams. In a typical grid of beam implementation, the mobile transceivers or User Equipment (UE) may measure the received signal strength (or possibly a Signal-to-Noise-Ratio (SNR) or a Signal-to-Noise-and Interference-Ratio (SINR)) on each beam of the grid. The mobile transceiver or UE may report the best beam to the base station. For this purpose, there may be periodic beam search intervals, where a beam search pilot signal is transmitted from either beam of the grid, e.g. consecutively in time. The base station then uses the selected beam to transmit data to the UE, e.g. in the time slots between two beam search intervals, where additional demodulation pilot symbols may be inserted into the data allocation to assist the demodulation.

A typical implementation is a Discrete-Fourier-Transformation (DFT) grid of beams, i.e. with M antenna elements there are M beams (m = 1 ... M) formed by computing the per-element (k = 1 ...M) phase shift values by means of the Fourier transform exp(j 2 pi m k / M), wherein M may be the number of antenna elements (equidistant spacing in a linear antenna array is assumed), k is the antenna index and m is the beam index.

In grid of beam solutions both pilot and data signals benefit from the beamforming gain. Beam selection can be carried out rather infrequently (say >1ms update rates) and signaling of the preferred beam may cause little overhead, e.g. beam index requiring log₂(M) bits with DFT grid. However, full beamforming gain of 10log10(M) dBi may only be available if a user, UE or mobile transceiver is located in the respective beam main direction, and otherwise there may result a performance loss, e.g. 3dB loss if the user is located at the intersection of neighboring beams in the grid.

Document US 2010/0165914 A1 discloses a concept for beam tracking and beam width adjustment in a mobile communication system. After initial beam generation and assignment multiple co-located mobiles may be served using one beam.

Document US 2014/0293803 A1 describes a concept for cooperative multipoint transmission and multi-user multiple-input-multiple-output transmission in a mobile communication system.

Document US 2009/161772A1 discloses a transmission device for transmitting a control channel, a pilot channel, and a data channel. The transmission device includes a unit that transmits the data channel by using one of a multi-beam and a variable directional beam, the multi-beam including a plurality of fixed directional beams having respective fixed directions different from each other, the variable directional beam being of a direction changing along with the position of a mobile terminal; and a unit that transmits a known signal as the pilot channel by using one of the multi-beam and the variable directional beam. The variable directional beam may be generated by switching one or more fixed directional beams.

Document US 2015/0131750A1 disclose an adaptive sectorization of a spational region for parallel multi-user transmission. A node is configured to generate a set of precoding matrices for a set of beam cones in the spatial region; and generate a beam cone for multi-user beamforming transmissions using system information for the beam cone. A precoding matrix in the set of precoding matrices can be used for each beam cone, and each beam cone can cover a beam cone spatial region that differs from another beam cone spatial region of another beam cone in the spatial region. Each beam cone can include system information that differs from the system information of the other beam cones in the spatial region. The node can provide active or passive UE tracking. When UE tracking is used, the UE can be under a same virtual cell, which can avoid handovers and extensive feedback. The node can adapt the virtual cones so that the virtual cones cover the 'moving' UEs.

### Summary of illustrative Embodiments

The invention is defined by the independent claims. Preferred embodiments of the invention are stipulated in the dependent claims. While several embodiments and/or examples have been disclosed in the description, the subject matter for which protection is sought is strictly and solely limited to those embodiments and/or examples encompassed by the scope of the appended claims. Embodiments and/ or examples mentioned in the description that do not fall under the scope of the claims are useful for understanding the invention.

Some simplifications may be made in the following summary, which is intended to highlight and introduce some aspects of the various exemplary embodiments, but such simplifications are not intended to limit the scope of the invention, which is defined by the appended claims. Detailed descriptions of a preferred exemplary embodiment adequate to allow those of ordinary skill in the art to make and use the inventive concepts will follow in later sections.

Various embodiments provide apparatuses, methods and computer programs for a base station transceiver and a mobile transceiver. Embodiments are based on the finding that a grid of beams can be used to serve a mobile transceiver in a cell of a mobile communication system, wherein a beam assigned to a mobile transceiver can be further adapted based on a mobility and/or a location of the mobile transceiver.

Embodiments provide an apparatus according to claim 1. Embodiments provide the advantage of efficient processing due to using a grid of beams for beam assignment to a mobile transceiver and still allow adapting a beam from the grid to take the mobile transceiver's mobility and/or location into account to achieve better gains compared to fixed beams.

In further embodiments the control module is configured to adapt a direction of the assigned beam based on the mobility and/or the location of the mobile transceiver. Such embodiments may steer or adapt a main direction of a beam from the grid based on a location, movement or changing position of the assigned mobile transceiver in the cell and improve the beam forming gain compared to a fixed or non-adapted beam for a user located outside the beam's main direction. The control module may be configured to adapt the grid of beams together with the beam assigned to the mobile transceiver in further embodiments. Embodiments may allow efficient processing by leaving relations between the beams of a grid constant while adapting, moving, or steering the beams of the whole grid together. In further embodiments, for example, the control module may be configured to adapt a direction of the grid of beams together with a direction of the beam assigned to the mobile transceiver and enabling efficient processing for the adaptation.

In further embodiments the control module may be configured to transmit beam specific pilot signals for the beams of the grid. In embodiments the mobile transceiver may carry out beam specific channel estimation and beam identification based on the beam specific pilot channel. Embodiments may enable a number of open and/or closed loop mechanisms on a beam level. In further embodiments the control module may be configured to individually adapt the assigned beam within the grid of beams. Such an embodiment may allow higher beamforming gains for individual mobile transceivers as different beams within the grid can be adapted differently. The control module may be configured to provide a first grid of beams for each of which a beam specific pilot signal is transmitted, and the control module may be configured to provide a second grid of beams (which may be a number of individually adapted beams after some adaptations, and may hence deviate from a strictly uniform grid) and to assign a beam of the second grid to the mobile transceiver. Embodiments may hence enable a separation or using different beams for pilot signal and data transmission. Beams for data transmission may hence be adapted differently from the beams used for pilot transmission.

The control module may be further configured to overlap the beam assigned to the mobile transceiver with a beam from the first grid of beams, and to adapt the assigned beam iteratively such that the adapted assigned beam deviates from the beams of the first grid. Embodiments may enable initial channel estimation on the basis of beam specific pilot channels of the first grid of beams. After initial channel estimation, subsequent channel estimation may be iteratively adapted in line with beam adaptations, e.g. using other mechanisms such as dedicated or user individual pilot signals or symbols.

Embodiments further provide a method according to claim 7.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates an embodiment of an apparatus for a base station transceiver and an apparatus for a mobile transceiver;
Fig. 2 illustrates an embodiment with entire grid adaptation at the top and an embodiment with individual beam adaptation based on a grid at the bottom;
Fig. 3 illustrates an embodiment with incremental individual beam adaptation based on a grid of beams;
Fig. 4 shows a block diagram of a flow chart of an embodiment of a method for a base station transceiver; and
Fig. 5 shows a block diagram of a flow chart of an embodiment of a method for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention as defined by the appended claims. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments are based on the finding that a grid of beams can be implemented using efficient processing, e.g. using analog or digital processing. Moreover, a certain degree of adaptation can still be allowed on top of assigning beams from the grid of beams. For example, a beam pointing direction of the entire grid or of individual beams of the grid may be adapted, when using the same grid for both beam search pilot and data transmission. In some embodiments, precoding for data transmission may be separated from the grid of beams used for transmissions of per-beam search pilots, e.g. by using user-specific data beams together with a grid of pilot beams, where the user-specific beams may use the pointing directions of the grid as initial values. Embodiments may enable enhanced system performance through improved beam pointing.

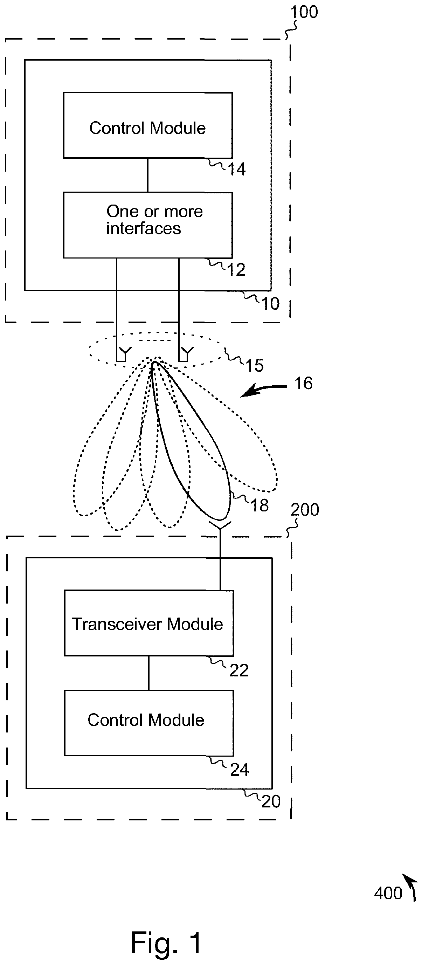

Fig. 1 illustrates an embodiment of an apparatus 10 for a base station transceiver 100 and an apparatus 20 for a mobile transceiver 200. Embodiments may also provide a base station transceiver 100 (broken lines in Fig. 1) comprising the base station transceiver apparatus 10 and a mobile transceiver 200 (broken lines in Fig. 1) comprising the mobile transceiver apparatus 20. Embodiments may also provide a mobile communication system 400 comprising an embodiment of the base station transceiver 100 (broken lines in Fig. 1) and the mobile transceiver 200 (broken lines in Fig. 1). The apparatus 10/20 may be adapted to or operable in a base station transceiver 100/mobile transceiver 200, respectively. The base station transceiver 100 is configured for a mobile communication system 400 and the base station transceiver 100 is configured to serve mobile transceivers 200 in at least one cell of the mobile communication system 400.

The mobile communication system 400 may, for example, correspond to one of the Third Generation Partnership Project (3GPP)-standardized mobile communication networks, where the term mobile communication system 400 is used synonymously to mobile communication network. The mobile or wireless communication system 400 may correspond to a mobile communication system of the 5^{th} Generation (5G) and may use mm-Wave technology. The mobile communication system 400 may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver 100 can be operable to communicate with one or more active mobile transceivers 200 and a base station transceiver 100 can be located in or adjacent to a coverage area of another base station transceiver, e.g. a macro cell base station transceiver or small cell base station transceiver. Hence, embodiments may provide a mobile communication system 400 comprising one or more mobile transceivers 200 and one or more base station transceivers 100, wherein the base station transceivers 100 may establish macro cells or small cells, as e.g. pico-, metro-, or femto cells. A mobile transceiver 200 may correspond to a smartphone, a cell phone, user equipment, a laptop, a notebook, a personal computer, a Personal Digital Assistant (PDA), a Universal Serial Bus (USB) -stick, a car, etc. A mobile transceiver 200 may also be referred to as User Equipment (UE) or mobile in line with the 3GPP terminology.

A base station transceiver 100 can be located in the fixed or stationary part of the network or system. A base station transceiver 100 may correspond to a remote radio head, a transmission point, an access point, a macro cell, a small cell, a micro cell, a femto cell, a metro cell etc. A base station transceiver 100 can be a wireless interface of a wired network, which enables transmission of radio signals to a UE or mobile transceiver 200. Such a radio signal may comply with radio signals as, for example, standardized by 3GPP or, generally, in line with one or more of the above listed systems. Thus, a base station transceiver 100 may correspond to a NodeB, an eNodeB, a Base Transceiver Station (BTS), an access point, a remote radio head, a transmission point etc., which may be further subdivided in a remote unit and a central unit.

A mobile transceiver 200 can be associated with a base station transceiver 100 or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

In line with Fig. 1 the base station transceiver apparatus 10 comprises one or more interfaces 12 being configured to provide signals for multiple antennas. An interface 12 may be a connector, a pin, a plug, a register, etc. that is configured to provide and/or to determine signals from the antennas. In some embodiments the one or more interfaces 12 may be configured to provide and/or determine analog or digital signals, signals of a transmission band, an intermediate band, or in the base band. Between one or more interfaces 12 and the actual antennas there may be further components such that the antennas might be directly or indirectly (with intermediate components) coupled to the one or more interfaces 12. For example, a transceiver module may be coupled to the one or more interface 12. Such a transceiver module may comprise typical transceiver components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The antennas may correspond to any transmit and/or receive antennas, such as horn antennas, dipole antennas, patch antennas, sector antennas etc. The antennas may be a plurality of antennas 15 as shown in Fig. 1 inside the dotted line and they may be arranged in a defined geometrical setting, such as a uniform array, a linear array, a circular array, a triangular array, a uniform field, a field array, combinations thereof, etc.

As further shown in Fig. 1 the apparatus 10 also comprises a control module 14, which is configured to control the one or more interfaces 12, the transceiver module, respectively. In the embodiment shown in Fig.1 the control module 14 is coupled to the one or more interfaces 12. The control module 14 may be implemented as or correspond to one or more control units, one or more control modules, one or more control devices, any means for controlling, etc. In some embodiments the control module may be implemented as a programmable hardware component such as a processor, a Digital Signal Processor (DSP), a general purpose processor, or any other programmable hardware. In some embodiments the control module 14 may therefore at least partly correspond to software, which is adapted to be executed on an accordingly adapted programmable hardware component.

The control module 14 is configured to form a grid 16 of beams covering the cell. In the illustration of Fig. 1 the one beam 18 of the grid 16 is depicted in solid lines and it is assumed that the mobile transceiver 200 is assigned to this beam. The grid 16 of beams comprises further beams which are shown in dotted lines in Fig. 1. The grid 16 hence corresponds to a number or plurality of beams pointing in different directions and covering the area of the cell. In embodiments different techniques may be used to generate the grid 16 of beams. Signals transmitted to and/or received from the antennas are phase shifted versions of each other. Depending on the geometry of the antennas directions of constructive and destructive superposition can be generated making up the beams. For example, analog phase shifters or a Butler matrix may be used with preset or configurable phase relations to generate the grid 16. In other embodiments digital beamforming may be used such that the phases of the signal are manipulated digitally, e.g. in the base band. For example a Discrete Fourier Transformation (DFT) may be used to form the grid 16. Signals in the antennas paths are then multiplied with DFT coefficient, e.g. with exp(j 2 pi m k / M), in which M is the number of antennas, m is the beam index and k is the antenna element index, further assuming a linear array of antennas. In further embodiments digital and analog beamforming may be used, as will be detailed subsequently. It is to be noted that the grids shown in Figs. are idealized and at least initially have beams with uniformly distributed main directions across the cell area. This representation is used for simplicity reasons.

In embodiments the grid may correspond to a set of beams, which are not uniform, they may differ in their shape and direction. For example, a codebook comprising a number of precoding vectors may be defined and a precoding vector may generate a beam, which can have a completely different shape as the ones depicted. From the code book a set of precoding vectors can be selected forming the grid of beams. The beams within the grid may then differ in their directions and shapes. Such a selection for the grid 16 of beams may depend on the actual network situation, whether spatial nulling or spatial interference reduction/cancellation is applied, the characteristic of the deployment scenario, whether there is line-of-sight or non-line-of-sight propagation, how many mobile transceivers are to be served, how many antennas elements are available, etc.

In the embodiment depicted in Fig. 1 the control module 14 is further configured to assign at least one beam 18 of the grid 16 of beams to the mobile transceiver 200. Assigning the mobile transceiver 200 to the beam 18 means, that the beam pattern 18 is used to transmit and/or receive signals to or from the mobile transceiver 200. These signals may include data and control signals. In some embodiments, data and control signals may be communicated (transmitted and/or received) using different beams as will be detailed in the sequel. Moreover, it is conceivable to use different beams for transmission and reception. The control module 14 is further configured to adapt the assigned beam 18 based on a mobility and/or a location of the mobile transceiver 200. As the mobile transceiver 200 moves, i.e. as its radio channel and angles of arriving and/or departing signals at the base station transceiver 100 change, the beam 18 is adapted in embodiments.

Embodiments may provide a more efficient processing compared to using two interlaced beam grids, e.g. two DFT grids where the pilots of the first and second grid are transmitted consecutively in time, the first grid is defined by exp(j 2 pi m k / M) and the second grid is shifted by half a beam width according to exp(j 2 pi m k / M + j offset), offset = pi/M. Embodiments may enable a decreased overhead and latency for pilot transmission compared to interlaced grids (2x number of pilots), plus some minor overhead increase for signaling the best beam index (2x). Pilot signals are used to enable channel estimation for the respective beams and to enable beam identification, beam specific measurements, respectively. Compared to Direction-Of-Arrival (DoA) based user-specific beamforming, i.e. a beam used for data transmission is directed with fine angular resolution towards the user, embodiments may provide a higher efficiency at the mobile transceiver 200, since the signaling overhead may be reduced for the mobile transceiver 200. The DoA is computed in the uplink based on pilots transmitted by the UE, which may result in higher battery drain and lower reliability at the mobile transceiver 200 and may therefore lower the efficiency.

In some embodiments the control module 14 is configured to adapt a direction of the assigned beam based on the mobility and/or the location of the mobile transceiver 200. In some embodiments the control module 14 adapts the beam 18 such that it follows the mobile transceiver 200. It is further noted that in some embodiments the beam specific pilot signals are reference signals that allow beam identification/search and/or channel estimation.

Different or orthogonal pilot signals may be used in different beams. Orthogonality can be achieved using different mechanisms, e.g. spatial multiplex using the beams, Time Division Multiplex (TDM), Frequency Division Multiplex (FDM), Code Division Multiplex (CDM), etc.

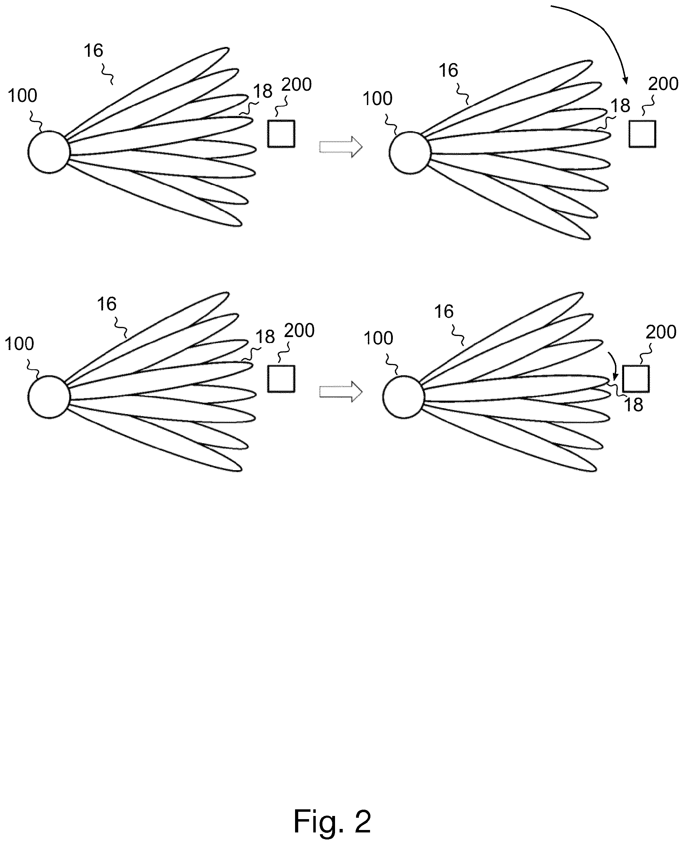

In another embodiment depicted in Fig. 2 at the top, the same grid 16 of beams is applied for both beam search pilot and data transmission. Fig. 2 illustrates a base station transceiver 100 with the above described base station transceiver apparatus 10 on the left hand side generating a grid 16 of beams. The control module 14 is configured to transmit beam specific pilot signals for the beams of the grid 16. The mobile transceiver 200 with the above described mobile transceiver apparatus 20 is assigned to beam 18, which is then adapted as shown on the left hand side of Fig. 2. This exemplifies an initial assignment of a suboptimum beam based on the location of the mobile transceiver 200. Based on movements (mobility) of the mobile transceiver 200 such a situation may also occur after initial assignment. In this embodiment a single grid 16 of eight beams (e.g. the DFT grid) is implemented, where the pointing direction of the beams (defined by the transmission of beam-specific pilots) is not static, but rather adaptively tuned within the cell so as to best match the locations of the active users in the cell. The aim could be to maximize, optimize or improve a certain utility function e.g. the cell throughput, the received power at the user or mobile transceiver, a Signal-to-Noise Ratio (SNR), a Signal-to-Interference-and-Noise Ratio (SINR), bit-energy over noise density, etc. In turn this may increase a data rate for the cell, in particular if there is a small number of active users in the cell. In embodiments different numbers of users or mobile transceivers may be assigned to a beam. For example, each beam may serve a single user only. In other embodiments a beam may serve multiple users using TDM, FDM, CDM or any other multiplexing scheme to enable their multiple access.

In the embodiment depicted at the top of Fig. 2 the control module 14 is configured to adapt the grid 16 of beams together with the beam 18 assigned to the mobile transceiver 200.

In a first variant the entire grid 16 of beams is shifted, e.g. the DFT grid is adaptively tuned according to exp(j 2 pi m k / M + j phase(t)), where phase(t) denotes the time-variant tuning parameter. The control module 14 is then configured to adapt a direction of the grid 16 of beams together with a direction of the beam 18 assigned to the mobile transceiver 200. The control module 14 may be configured to adapt the direction of the grid 16 of beams based on the mobility and/or the location of the mobile transceiver 200, while keeping directional relations of the beams within the grid 16 of beams. This is illustrated on the right hand side of Fig. 2, where the beam 18 is pointed directly at the mobile transceiver 200 and the grid 16 is moved or steered with the beam 18 without changing interrelations of the beams 18 within the grid 16. It is to be noted that sectorized antenna elements or antenna elements with a nonuniform antenna gain may be used to form the grid 16. When the grid 16 is steered then the individual antenna gains of the antenna elements may influence the gain for different directions. Keeping the interrelation of the beams of the grid 16 as used in this embodiment should therefore be interpreted in that the phase relations of the signals used in the paths of the antenna elements are kept, such that the relations of the main directions of the beams within the grid 16 are also kept.

Another embodiment is shown in Fig. 2 at the bottom using the same representation as in Fig. 2 at the top. In this embodiment the control module 14 is configured to individually adapt the assigned beam 18 within the grid 16 of beams. As shown at the bottom of Fig. 2 on the left, the mobile transceiver 100 is assigned to beam 18, similar to the embodiment shown at the top. As can be seen from the illustration on the right at the bottom, beam 18 is adapted in that its main direction is pointed at the mobile transceiver 200. The difference compared to the embodiment shown at the top is that the rest of the grid 16 is not steered together with beam 18. In this embodiment single beams within the grid 16 are shifted, in particular those beams, e.g. beam 18, actively serving a user, e.g. the m-th beam in the grid is shifted by phase_m(t). There may be increased inter-beam interference with this solution, which may be traded against gains in user throughput.

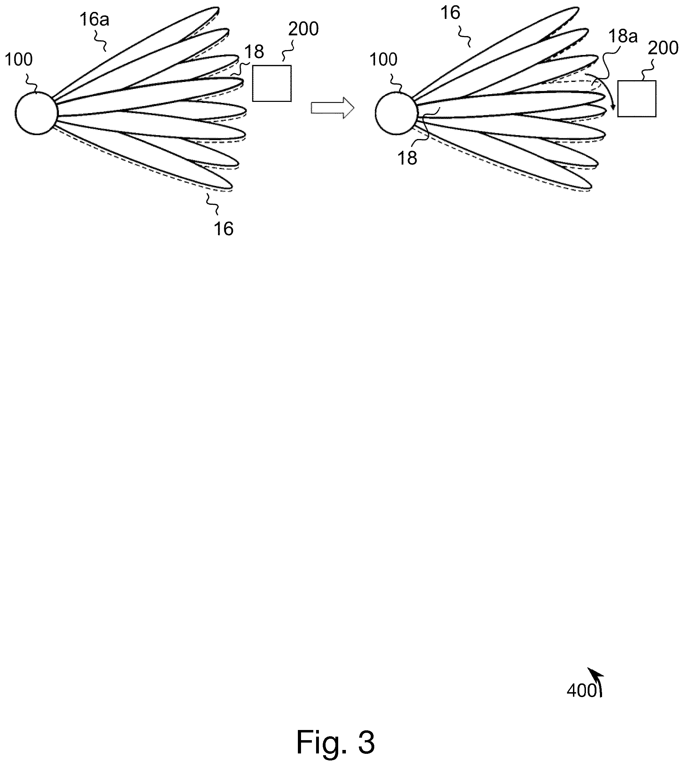

Fig. 3 illustrates an embodiment with incremental or successive individual beam adaptation based on a grid 16 of beams. In this embodiment separate beams are applied for beam search pilots and data. The control module 14 is configured to provide a first grid 16 of beams for each of which a beam specific pilot signal is transmitted. The control module 14 is further configured to provide a second grid 16a of beams and to assign a beam 18 of the second grid to the mobile transceiver 200. In Fig. 3 on the left hand side the first grid 16 is shown using a dashed line. In this embodiment the first grid 16 is a static grid of beams and it is applied for beam search pilots. The control module 14 is further configured to overlap the beam 18 assigned to the mobile transceiver 200 with a beam from the first grid of beams, and to adapt the assigned beam 18 iteratively such that the adapted assigned beam deviates from the beams of the first grid 16. This is illustrated in Fig. 3 on the right hand side, where it can be seen that the dashed grid 16 remains steady while the direction of beam 18 is changed and deviates from the underlying beam 18a of the dashed grid 16. In an embodiment (potentially immediately) after beam assignment or selecting beam 18 from grid 16, beam 18 is used for data and the corresponding beam 18a, underlying beam 18 at least during initial assignment, is used for beam search pilot transmission. So after initial assignment of a beam 18 from the grid 16, data beam 18 is e.g. iteratively adapted to match user position (adapted beam 18 in Fig. 3 on the right). This embodiment applies separate beams for beam search pilots and data. The grid 16 of beams for the transmission of per-beam search pilot signals is typically a static grid. In further embodiments the grid 16 could also be time-variant as described above. Data transmission to a user takes place on the user-specific beam 18. Such beam can be derived from a beam in the grid 16 by means of a user-specific phase shift, e.g. the i-th user reports the m-th beam as the best beam among the pilot grid 16, and for data transmission to the i-th user the user-specific beam 18 is obtained by shifting the m-th beam in the grid by phase_i(t). In further embodiments the mobile transceiver 200 may measure adjacent beams, determine its position between these beams and report information related to the position or an according measure to the base station transceiver 100, where the control module 14 may adjust user-specific beam 18 accordingly.

The grid 16 of pilot beams can be applied as initial beam directions for data transmission, e.g. after user attachment or after beam switching the data transmission initially starts with a beam 18 selected among the grid 16 of pilot beams. Then, iteratively, the beam direction for data transmission to the user is refined and adapted according to the user position, location and/or mobile transceiver 200 mobility, respectively. This can be achieved based on uplink pilot signals received by the base station 200, e.g. by means of algorithms computing the direction of arrival with good resolution, so knowledge of the initial beam direction (from selection among the grid 16 of beam set) will help to accelerate the link setup and to reduce computational complexity for the estimation algorithms. This can alternatively be achieved by closed-loop feedback reports as further described below. Some embodiments combine the concepts of grid 16 of beam (sometimes also referred to as fixed beam forming) and user-specific beamforming.

Measurements and possibly signaling may be set up in order to determine and apply the phase shifts (phase(t) or phase_m(t) or phase_i(t)). The optimum or an improved phase shift may be derived based on uplink pilot or data signals received from the active users. An optimum or improved phase shift may alternatively be derived from downlink measurements performed by the UE or mobile transceiver 200 based on the beam search pilots received on beams of the grid neighboring the serving beam, e.g. UE or mobile transceiver 200 would report the index and SINR of the best beam plus the delta-SINRs of the two neighboring beams (e.g. in predefined order e.g. starting with the lower beam index). This may imply a modified best or improved beam reporting procedure with minor increase in overhead. In some embodiments the UE or mobile transceiver 200 may report the best beam plus a direction indicator (left or right), possibly together with a step size indicator (e.g. 0, 1, 2, or 3 degrees), to allow iterative fine-tuning of the beam direction for data transmission. In further embodiments absolute angle information, e.g. based on a determined position between adjacent or neighboring beams of an underlying fixed grid would also serve the purpose.

Such an embodiment is also illustrated in Fig. 1. Fig. 1 illustrates a mobile transceiver apparatus 20, which is comprised in the mobile transceiver 200. The mobile transceiver 200 is configured to be served by the base station transceiver 100 providing the at least one cell of the mobile communication system 400 in line with the above description. The apparatus 20 for the mobile transceiver 200 of the mobile communication system 400 comprises a transceiver module 22 to receive and measure beam specific pilot signals from the grid 16 of beams provided by the base station transceiver 100 in the cell of the mobile communication system 400. In embodiments the transceiver module 22 may be implemented as one or more transceiver devices, one or more transceiver units, one or more transceiver modules, any means for transceiving, i.e. for transmitting and/or receiving, etc. The transceiver module 22 may correspond to any means for receiving and transmitting. The transceiver module 22 may comprise typical transceiver components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The mobile transceiver apparatus 20 further comprises a control module 24, which is coupled to the transceiver module 22. The control module 14 may be implemented as or correspond to one or more control units, one or more control modules, one or more control devices, any means for controlling, etc. In some embodiments the control module may be implemented as a programmable hardware component such as a processor, a DSP, a general purpose processor, or any other programmable hardware. In some embodiments the control module 24 may therefore at least partly correspond to software, which is adapted to be executed on an accordingly adapted programmable hardware component. The control module 24 is configured to control the transceiver module 22. The control module 24 is further configured to determine signal quality information related to one or more of the beam specific pilot signals. The control module 24 is further configured to provide the signal quality information related to the one or more beam specific pilot signals to the base station transceiver 100. The base station transceiver 100 can then assign the beam 18 to the mobile transceiver 100 based on the signal quality information. The signal quality information may correspond to a Signal-to-Noise Ratio (SNR), a Signal-to-Interference-and-Noise Ratio (SINR), a received power, bit energy over noise density, etc. and may relate to the above described utility function evaluated at the base station transceiver 100 for beam assignment. The signal quality information further comprises information related to a beam adjustment for improving the signal quality of the beam specific pilot and/or data signal. Such beam adjustment information may comprise information on how to adjust the assigned beam, e.g. relative or absolute angle information, directional information, etc.

In a further embodiment, the information related to the beam adjustment further comprises information related to a beam adjustment step size, e.g. a number of degrees, a left/right indicator, a left/right/neutral indicator, a predefined or preconfigured step size, etc. In a further embodiment the control module 24 of the mobile transceiver 200 may further be configured to determine information related to a receive signal quality of a beam of a neighbor cell and to provide the information related to the receive signal quality of the beam of the neighbor cell to the base station transceiver 100. The control module 14 of the base station transceiver apparatus 10 is further configured to determine information related to a receive signal quality information of a beam of a neighbor cell at the mobile transceiver 200 and to adapt the assigned beam 18 further based on the information related to the receive signal quality information of the beam of the neighbor cell at the mobile transceiver 200. Such beam adaptation may be carried out to optimize or improve an SINR at the mobile transceiver 200, to optimize or improve system capacity (inter-cell interference), etc. For example, a vendor-specific base station algorithm may be used in an embodiment.

In embodiments grid of beam-based methods can also be applied for improving inter-cell interference, e.g. by coordinating the beam directions via a centralized controller. In particular, the grid 16 of pilot beams may be adapted so as to minimize or reduce inter-cell interference, e.g. by applying phase shifting to the entire grid. This can be imagined as two interlaced beam grids, a first grid from a first cell and a second interlaced grid from a neighbor cell. Embodiments may use multi-site (multi base station) coordination algorithms (e.g. coordinated 3D beamforming).

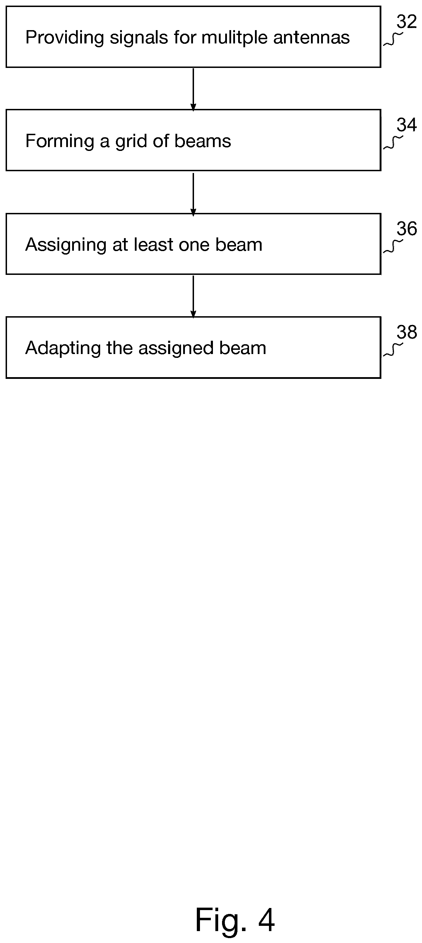

Fig. 4 shows a block diagram of a flow chart of an embodiment of a method for a base station transceiver 100. The base station transceiver 100 is configured to serve mobile transceivers 200 in at least one cell of the mobile communication system 400. The method for the base station transceiver 100 of the mobile communication system 400 comprises providing 32 signals for multiple antennas and forming 34 a grid 16 of beams covering the cells. The method further comprises assigning 36 at least one beam 18 of the grid of beams to a mobile transceiver 200 and adapting 38 the assigned beam 18 based on a mobility and/or a location of the mobile transceiver 200.

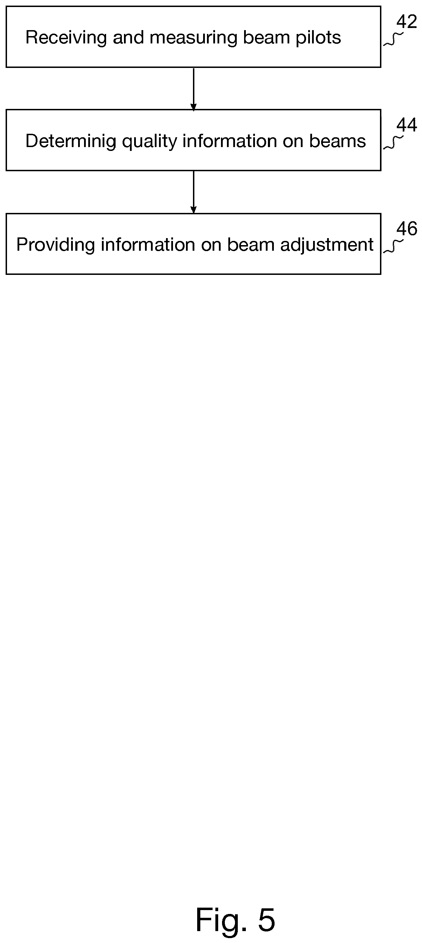

Fig. 5 shows a block diagram of a flow chart of an embodiment of a method for a mobile transceiver 200. The mobile transceiver 200 is configured to be served by the base station transceiver 100 providing at least one cell of the mobile communication system 400. The method for the mobile transceiver 200 of the mobile communication system 400 comprises receiving and measuring 42 beam specific pilot signals from a grid of beams 16 provided by the base station transceiver 100 in the cell of the mobile communication system 400. The method further comprises determining 44 signal quality information related to one or more of the beam specific pilot signals, and providing 46 signal quality information related to the one or more beam specific pilot signals to the base station transceiver 100. The signal quality information further comprises information related to a beam adjustment for improving the signal quality of the beam specific pilot and/or data signal.

Another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope, as defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a base station transceiver (100) of a mobile communication system (400), the base station transceiver (100) being configured to serve mobile transceivers (200) in at least one cell of the mobile communication system (400), the apparatus (10) comprising
one or more interfaces (12) being configured to provide signals for multiple antennas;
a control module (14) being configured to
control the one or more interfaces (12);
form a grid (16) of beams covering the cell;
assign at least one beam (18) of the grid (16) of beams to a mobile transceiver (200); and
adapt the assigned beam (18) based on a mobility and/or a location of the mobile transceiver (200),
**characterized in that** the control module (14) is configured to adapt the direction of the grid (16) of beams together with the direction of the assigned beam based on the mobility and/or the location of the mobile transceiver (200), while keeping directional relations of the beams within the grid (16) of beams.

2. The apparatus (10) of claim 1, where the control module (14) is further configured to determine information related to a receive signal quality information of a beam of a neighbor cell at the mobile transceiver (200) and to adapt the assigned beam (18) further based on the information related to the receive signal quality information of the beam of the neighbor cell at the mobile transceiver (200).

3. A mobile communication system (400) comprising a base station transceiver (100) and a mobile transceiver configured to be served by the base station transceiver (100), the base station transceiver (100) including a first apparatus according to claim 1 or 2.

4. The mobile communication system (400) according to claim 3, wherein the mobile transceiver comprises a second apparatus comprising a transceiver module configured to receive and measure beam specific pilot signals from a grid of beams provided by the base station transceiver.

5. The mobile communication system (400) according to claim 4, wherein the second apparatus comprises a control module configured to control the transceiver module, to determine signal quality information related to one or more of the received beam specific pilot signals and to provide signal quality information related to the one or more received beam specific pilot signals to the base station transceiver.

6. The mobile communication system (400) according to claim 5, wherein the signal quality information further comprises information related to a beam adjustment for improving the signal quality of the beam specific pilot and/or data signal.

7. A method for a base station transceiver (100) of a mobile communication system (400), the base station transceiver (100) being configured to serve mobile transceivers (200) in at least one cell of the mobile communication system (400), the method comprising
providing (32) signals for multiple antennas;
forming (34) a grid (16) of beams covering the cells;
assigning (36) at least one beam (18) of the grid of beams to a mobile transceiver (200); and
adapting (38) the assigned beam (18) based on a mobility and/or a location of the mobile transceiver (200);
**characterized in that** the method comprises adapting the direction of the grid (16) of beams together with the direction of the assigned beam based on the mobility and/or the location of the mobile transceiver (200), while keeping directional relations of the beams within the grid (16) of beams.

8. A method for a mobile communication system (400) comprising a base station transceiver (100) and a mobile transceiver, the method for the mobile communication system (400) comprising the steps of the method for a base station transceiver (100) according to claim 7, the method for the mobile communication system (400) further comprising
receiving and measuring (42), by the mobile transceiver, beam specific pilot signals from a grid (16) of beams provided by the base station transceiver (100) in the cell of the mobile communication system (400);
determining (44), by the mobile transceiver, signal quality information related to one or more of the beam specific pilot signals;
providing (46), by the mobile transceiver, the signal quality information related to the one or more beam specific pilot signals to the base station transceiver.

9. The method according to claim 8, wherein the signal quality information further comprises information related to a beam adjustment for improving the signal quality of the beam specific pilot and/or data signal.

10. A computer program having a program code for performing the method of claim 7, when the computer program is executed on a computer, a processor, or a programmable hardware component.

## Patentansprüche

1. Vorrichtung (10) für einen Basisstations-Sender-Empfänger (100) eines mobilen Kommunikationssystems (400), wobei der Basisstations-Sender-Empfänger (100) dazu ausgelegt ist, mobile Sender-Empfänger (200) in mindestens einer Zelle des mobilen Kommunikationssystems (400) zu bedienen, wobei die Vorrichtung (10) Folgendes umfasst:
eine oder mehrere Schnittstellen (12), die dazu ausgelegt sind, Signale für mehrere Antennen bereitzustellen;
ein Steuermodul (14) das dazu ausgelegt ist,
die eine oder die mehreren Schnittstellen (12) zu steuern;
ein Raster (16) von Strahlen zu bilden, die die Zelle abdecken;
mindestens einen Strahl (18) des Rasters (16) von Strahlen einem mobilen Sender-Empfänger (200) zuzuweisen; und
den zugewiesenen Strahl (18) basierend auf einer Mobilität und/oder einem Ort des mobilen Sender-Empfängers (200) anzupassen,
**dadurch gekennzeichnet, dass** das Steuermodul (14) dazu ausgelegt ist, die Richtung des Rasters (16) von Strahlen zusammen mit der Richtung des zugewiesenen Strahls basierend auf der Mobilität und/oder dem Ort des mobilen Sender-Empfängers (200) anzupassen, während Richtungsbeziehungen der Strahlen innerhalb des Rasters (16) von Strahlen beibehalten werden.

2. Vorrichtung (10) nach Anspruch 1, wobei das Steuermodul (14) ferner dazu ausgelegt ist, Informationen, die sich auf eine Empfangssignalqualitätsinformation eines Strahls einer Nachbarzelle an dem mobilen Sender-Empfänger (200) beziehen, zu bestimmen und den zugewiesenen Strahl (18) ferner basierend auf den Informationen anzupassen, die sich auf die Empfangssignalqualitätsinformation des Strahls der Nachbarzelle an dem mobilen Sender-Empfänger (200) beziehen.

3. Mobiles Kommunikationssystem (400), das einen Basisstations-Sender-Empfänger (100) und einen mobilen Sender-Empfänger umfasst, der dazu ausgelegt ist, durch den Basisstations-Sender-Empfänger (100) bedient zu werden, wobei der Basisstations-Sender-Empfänger (100) eine erste Vorrichtung nach Anspruch 1 oder 2 beinhaltet.

4. Mobiles Kommunikationssystem (400) nach Anspruch 3, wobei der mobile Sender-Empfänger eine zweite Vorrichtung umfasst, die ein Sender-Empfänger-Modul umfasst, das dazu ausgelegt ist, strahlspezifische Pilotsignale von einem Raster von Strahlen, die durch den Basisstations-Sender-Empfänger bereitgestellt werden, zu empfangen und zu messen.

5. Mobiles Kommunikationssystem (400) nach Anspruch 4, wobei die zweite Vorrichtung ein Steuermodul umfasst, das dazu ausgelegt ist, das Sender-Empfänger-Modul zu steuern, Signalqualitätsinformationen bezogen auf einen oder mehrere der empfangenen strahlspezifischen Pilotsignale zu bestimmen und Signalqualitätsinformationen bezogen auf das eine oder die mehreren empfangenen strahlspezifischen Pilotsignale an den Basisstations-Sender-Empfänger bereitzustellen.

6. Mobiles Kommunikationssystem (400) nach Anspruch 5, wobei die Signalqualitätsinformationen ferner Informationen umfassen, die sich auf eine Strahlanpassung zur Verbesserung der Signalqualität des strahlspezifischen Pilot- und/oder Datensignals beziehen.

7. Verfahren für einen Basisstations-Sender-Empfänger (100) eines mobilen Kommunikationssystems (400), wobei der Basisstations-Sender-Empfänger (100) dazu ausgelegt ist, mobile Sender-Empfänger (200) in mindestens einer Zelle des mobilen Kommunikationssystems (400) zu bedienen, wobei das Verfahren Folgendes umfasst:
Bereitstellen (32) von Signalen für mehrere Antennen;
Bilden (34) eines Rasters (16) von Strahlen, die die Zellen abdecken;
Zuweisen (36) mindestens eines Strahls (18) des Rasters von Strahlen zu einem mobilen Sender-Empfänger (200); und Anpassen (38) des zugewiesenen Strahls (18) basierend auf einer Mobilität und/oder einem Ort des mobilen Sender-Empfängers (200);
**dadurch gekennzeichnet, dass** das Verfahren umfasst, die Richtung des Rasters (16) von Strahlen zusammen mit der Richtung des zugewiesenen Strahls basierend auf der Mobilität und/oder dem Ort des mobilen Sender-Empfängers (200) anzupassen, während Richtungsbeziehungen der Strahlen innerhalb des Rasters (16) von Strahlen beibehalten werden.

8. Verfahren für ein mobiles Kommunikationssystem (400), das einen Basisstations-Sender-Empfänger (100) und einen mobilen Sender-Empfänger umfasst, wobei das Verfahren für das mobile Kommunikationssystem (400) die Schritte des Verfahrens für einen Basisstations-Sender-Empfänger (100) nach Anspruch 7 umfasst, wobei das Verfahren für das mobile Kommunikationssystem (400) ferner Folgendes umfasst:
Empfangen und Messen (42), durch den mobilen Sender-Empfänger, von strahlspezifischen Pilotsignalen von einem Raster (16) von Strahlen, die durch den Basisstations-Sender-Empfänger (100) in der Zelle des mobilen Kommunikationssystems (400) bereitgestellt werden;
Bestimmen (44), durch den mobilen Sender-Empfänger, von Signalqualitätsinformationen, die sich auf eines oder mehrere der strahlspezifischen Pilotsignale beziehen;
Bereitstellen (46), durch den mobilen Sender-Empfänger, der Signalqualitätsinformationen, die sich auf das eine oder die mehreren strahlspezifischen Pilotsignale beziehen, an den Basisstations-Sender-Empfänger.

9. Verfahren nach Anspruch 8, wobei die Signalqualitätsinformationen ferner Informationen umfassen, die sich auf eine Strahlanpassung zur Verbesserung der Signalqualität des strahlspezifischen Pilot- und/oder Datensignals beziehen.

10. Computerprogramm mit einem Programmcode zum Ausführen des Verfahrens nach Anspruch 7, wenn das Computerprogramm auf einem Computer, einem Prozessor oder einer programmierbaren Hardwarekomponente ausgeführt wird.

## Revendications

1. Appareil (10) pour un émetteur-récepteur de station de base (100) d'un système de communications mobiles (400), l'émetteur-récepteur de station de base (100) étant configuré pour desservir des émetteurs-récepteurs mobiles (200) dans au moins une cellule du système de communications mobiles (400), l'appareil (10) comprenant
une ou plusieurs interfaces (12) configurées pour fournir des signaux pour de multiples antennes ;
un module de commande (14) configuré pour
commander les une ou plusieurs interfaces (12) ;
former un réseau (16) de faisceaux couvrant la cellule ;
assigner au moins un faisceau (18) du réseau (16) de faisceaux à un émetteur-récepteur mobile (200) ; et
adapter le faisceau assigné (18) sur la base d'une mobilité et/ou d'un emplacement de l'émetteur-récepteur mobile (200),
**caractérisé en ce que** le module de commande (14) est configuré pour adapter la direction du réseau (16) de faisceaux ainsi que la direction du faisceau assigné sur la base de la mobilité et/ou de l'emplacement de l'émetteur-récepteur mobile (200), tout en maintenant des relations de direction des faisceaux au sein du réseau (16) de faisceaux.

2. Appareil (10) selon la revendication 1, dans lequel le module de commande (14) est configuré en outre pour déterminer des informations relatives à des informations de qualité de signal reçu d'un faisceau d'une cellule voisine au niveau de l'émetteur-récepteur mobile (200) et adapter le faisceau assigné (18) sur la base en outre des informations relatives aux informations de qualité de signal reçu du faisceau de la cellule voisine au niveau de l'émetteur-récepteur mobile (200).

3. Système de communications mobiles (400) comprenant un émetteur-récepteur de station de base (100) et un émetteur-récepteur mobile configuré pour être desservi par l'émetteur-récepteur de station de base (100), l'émetteur-récepteur de station de base (100) comportant un premier appareil selon la revendication 1 ou 2.

4. Système de communications mobiles (400) selon la revendication 3, dans lequel l'émetteur-récepteur mobile comprend un second appareil comprenant un module d'émetteur-récepteur configuré pour recevoir et mesurer des signaux pilotes spécifiques aux faisceaux provenant d'un réseau de faisceaux fourni par l'émetteur-récepteur de station de base.

5. Système de communications mobiles (400) selon la revendication 4, dans lequel le second appareil comprend un module de commande configuré pour commander le module d'émetteur-récepteur, déterminer des informations de qualité de signaux relatives à un ou plusieurs des signaux pilotes spécifiques aux faisceaux reçus et fournir des informations de qualité de signaux relatives aux un ou plusieurs signaux pilotes spécifiques aux faisceaux reçus à l'émetteur-récepteur de station de base.

6. Système de communications mobiles (400) selon la revendication 5, dans lequel les informations de qualité de signaux comprennent en outre des informations relatives à un réglage de faisceau pour améliorer la qualité de signal du signal pilote spécifique au faisceau et/ou du signal de données.

7. Procédé pour un émetteur-récepteur de station de base (100) d'un système de communications mobiles (400), l'émetteur-récepteur de station de base (100) étant configuré pour desservir des émetteurs-récepteurs mobiles (200) dans au moins une cellule du système de communications mobiles (400), le procédé comprenant
la fourniture (32) de signaux pour de multiples antennes ;
la formation (34) d'un réseau (16) de faisceaux couvrant les cellules ;
l'assignation (36) d'au moins un faisceau (18) du réseau de faisceaux à un émetteur-récepteur mobile (200) ;
et
l'adaptation (38) du faisceau assigné (18) sur la base d'une mobilité et/ou d'un emplacement de l'émetteur-récepteur mobile (200) ;
**caractérisé en ce que** le procédé comprend l'adaptation de la direction du réseau (16) de faisceaux ainsi que de la direction du faisceau assigné sur la base de la mobilité et/ou de l'emplacement de l'émetteur-récepteur mobile (200), tout en maintenant des relations de direction des faisceaux au sein du réseau (16) de faisceaux.

8. Procédé pour un système de communications mobiles (400) comprenant un émetteur-récepteur de station de base (100) et un émetteur-récepteur mobile, le procédé pour le système de communications mobiles (400) comprenant les étapes du procédé pour un émetteur-récepteur de station de base (100) selon la revendication 7, le procédé pour le système de communications mobiles (400) comprenant en outre
la réception et la mesure (42), par l'émetteur-récepteur mobile, de signaux pilotes spécifiques aux faisceaux depuis un réseau (16) de faisceaux fourni par l'émetteur-récepteur de station de base (100) dans la cellule du système de communications mobiles (400) ;
la détermination (44), par l'émetteur-récepteur mobile, d'informations de qualité de signaux relatives à un ou plusieurs des signaux pilotes spécifiques aux faisceaux ;
la fourniture (46), par l'émetteur-récepteur mobile, des informations de qualité de signaux relatives aux un ou plusieurs signaux pilotes spécifiques aux faisceaux à l'émetteur-récepteur de station de base.

9. Procédé selon la revendication 8, dans lequel les informations de qualité de signaux comprennent en outre des informations relatives à un réglage de faisceau pour améliorer la qualité de signal du signal pilote spécifique au faisceau et/ou du signal de données.

10. Programme informatique comportant un code de programme pour mettre en œuvre le procédé selon la revendication 7, quand le programme informatique est exécuté sur un ordinateur, un processeur, ou un composant matériel programmable.
